# EUROPÄISCHE PATENTANMELDUNG

(11) **EP 3 812 947 A1**
(43) Veröffentlichungstag der Anmeldung: **28.04.2021**
(21) Anmeldenummer: 19205388.2
(22) Anmeldetag: 25.10.2019
(51) Int. Cl.: G06F 21/76, G06F 21/64

(54) **AUTHENTIFIZIERUNG EINER TEILKONFIGURATION EINER FELDPROGRAMMIERBAREN LOGIKGATTER-ANORDNUNG**

(71) Anmelder: Siemens Aktiengesellschaft, 80333 München (DE)
(72) Erfinder: De Santis, Fabrizio, 80634 München (DE); Dichtl, Markus, 89231 Neu-Ulm (DE); Schneider, Daniel, 80796 München (DE); Sel, Tolga, 81379 München (DE); Zeschg, Thomas, 81543 München (DE)

(57) **Zusammenfassung**

Um eine Teilkonfiguration eines FPGA (2) zur Laufzeit zu authentifizieren, wird erste Teilkonfiguration (6) ausgelesen und mittels einer Streuwerteinheit (5) wird ein Streuwert der ersten Teilkonfiguration (6) gemäß einer vorgegebenen Streuwertfunktion bestimmt. Eine zweite Teilkonfiguration (7) wird dazu verwendet, einen vorgegebenen Referenzstreuwert der ersten Teilkonfiguration (6) zu bestimmen. Der Streuwert wird mittels der Streuwerteinheit (5) mit dem Referenzstreuwert überprüft und abhängig von einem Ergebnis der Überprüfung wird eine Authentizität der ersten Teilkonfiguration (6) festgestellt.

## Beschreibung

Die vorliegende Erfindung betrifft ein Verfahren zur Authentifizierung einer Teilkonfiguration einer feldprogrammierbaren Logikgatter-Anordnung, einen entsprechenden elektronischen Schaltkreis, ein Datenverarbeitungsprogramm sowie ein computerlesbares Speichermedium.

Eine feldprogrammierbare Logikgatter-Anordnung (englisch: "Field Programmable Gate Array"), FPGA, auch als feldprogrammierbares Gate-Array bezeichnet, erlaubt eine schnelle Signalverarbeitung und die flexible Änderung der mit dem FPGA realisierten Schaltung. Ein FPGA enthält eine Vielzahl von Logikgattern, deren Funktionalität zum Beispiel über Umsetzungstabellen (englisch: "Lookup Tables") definiert ist.

Die Funktionalität des FPGA wird beispielsweise durch das Laden einer extern gespeicherten Konfigurationsdatei, die auch als Bitstream bezeichnet wird, festgelegt. Die durch den geladenen Bitstream festgelegte laufende Konfiguration des FPGA kann jedoch zur Laufzeit verändert oder manipuliert werden. Insbesondere kann ein Angreifer die Konfiguration des FPGA während der Ausführung kritischer oder sicherheitsrelevanter Operationen stören, beispielsweise um eine Sicherheitsüberprüfung zu umgehen oder Information über einen geheimen Schlüssel zu gewinnen.

Die Konfiguration des FPGA kann beispielsweise durch Änderungen physikalischer Umgebungsbedingungen beeinflusst werden, etwa durch Temperaturveränderungen oder durch Strahlung. Diese können sowohl unabsichtlich als auch absichtlich und gezielt erfolgen, etwa um Schlüsselmaterial zu extrahieren.

Vor diesem Hintergrund ist eine Aufgabe der Erfindung, ein verbessertes Konzept zur Authentifizierung einer Teilkonfiguration eines FPGA anzugeben, das während der Laufzeit erfolgte Änderungen oder Manipulationen in der Teilkonfiguration feststellen kann.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, zur Laufzeit des FPGA einen Streuwert einer Teilkonfiguration zu berechnen, einen Referenzstreuwert aus einer zweiten Teilkonfiguration auszulesen und mit diesem den berechneten Streuwert zu überprüfen, um die Authentizität der ersten Teilkonfiguration festzustellen.

Gemäß dem verbesserten Konzept wird ein Verfahren zur Authentifizierung einer Teilkonfiguration einer feldprogrammierbaren Logikgatter-Anordnung, insbesondere zur Laufzeit, angegeben. Auf der Logikgatter-Anordnung ist ein Konfigurationsdatensatz gespeichert. Gemäß dem Verfahren wird eine erste Teilkonfiguration des Konfigurationsdatensatzes ausgelesen, insbesondere über eine Ausleseschnittstelle, insbesondere zu einer Laufzeit des FPGA, beispielsweise durch eine Streuwerteinheit. Mittels der Streuwerteinheit wird ein Streuwert der ersten Teilkonfiguration gemäß einer vorgegebenen Streuwertfunktion, insbesondere basierend auf der ausgelesenen ersten Teilkonfiguration, bestimmt und eine zweite, insbesondere von der ersten verschiedene, Teilkonfiguration des Konfigurationsdatensatzes wird, insbesondere über die Ausleseschnittstelle, insbesondere zur Laufzeit des FPGAs, ausgelesen, beispielsweise durch die Streuwerteinheit, um einen vorgegebenen Referenzstreuwert der ersten Teilkonfiguration zu bestimmen. Mittels der Streuwerteinheit wird der Streuwert mit dem Referenzstreuwert überprüft und wird abhängig von einem Ergebnis der Überprüfung eine Authentizität der ersten Teilkonfiguration festgestellt.

Bei der feldprogrammierbaren Logikgatter-Anordnung handelt es sich um ein FPGA, das auch als feldprogrammierbares Gate-Array (Englisch: "Field Programmable Gate Array") bezeichnet wird.

Der Konfigurationsdatensatz entspricht insbesondere einer auf das FPGA beziehungsweise eine Speichereinheit des FPGA geladene externe Konfigurationsdatei, die auch als Bitstream bezeichnet werden kann.

Unter der Laufzeit des FPGA kann insbesondere ein Zeitraum nach dem Laden der Konfigurationsdatei auf das FPGA verstanden werden, also ein Zeitraum, zu dem das FPGA gemäß der durch die Konfigurationsdatei festgelegten Konfiguration verwendet werden kann.

Das FPGA kann beispielsweise mehrere Module beinhalten, die beispielsweise funktionale Einheiten bilden. Ein Modul kann dabei eine Logikgatter-Teilanordnung der Logikgatter-Anordnung beinhalten.

Die erste Teilkonfiguration entspricht dabei insbesondere einem Modul des FPGA, das gemäß dem Verfahren nach dem verbesserten Konzept überprüft werden soll, dessen Authentizität also überprüft beziehungsweise festgestellt werden soll. Insbesondere handelt es sich bei der ersten Teilkonfiguration nicht um eine Gesamtkonfiguration des FPGA, also nicht um den gesamten Inhalt des Konfigurationsdatensatzes. Insbesondere enthält die erste Teilkonfiguration nicht den Referenzstreuwert.

Die Ausleseschnittstelle kann insbesondere als Hardware- und/oder Softwareschnittstelle verstanden werden, über die mittels eines Übertragungsprotokolls Inhalte oder Daten von der Speichereinheit an die Streuwerteinheit übermittelt werden können.

Die Speichereinheit kann beispielsweise ein SRAM- oder ein Block-RAM-Speicherelement beinhalten.

Die Streuwerteinheit kann beispielsweise vollständig auf dem FPGA implementiert sein oder vollständig extern zu dem FPGA, beispielsweise vollständig auf einer Prozessoreinheit eines Ein-Chip-Systems, SoC (englisch: "System-on-a-Chip"), das die Prozessoreinheit und das FPGA beinhaltet. Die Streuwerteinheit kann auch teilweise auf dem FPGA und teilweise auf der Prozessoreinheit implementiert sein. Die Streuwerteinheit kann in verschiedenen Ausführungsformen auch extern zu dem Ein-Chip-System implementiert sein.

Unter einem Streuwert kann ein Hashwert verstanden werden. Hier und im Folgenden werden die Begriffe Streuwert und Hashwert mit gleicher Bedeutung verwendet. Der Streuwert kann also insbesondere als Funktionswert der Streuwertfunktion verstanden werden, die auch als Hashfunktion bezeichnet wird. Die Streu- oder Hashfunktion bildet insbesondere einen Inhalt der ersten Teilkonfiguration auf den Streuwert ab.

Bei dem Referenzstreuwert handelt es sich insbesondere um einen Sollstreuwert, also um einen Streuwert, den die Streuwertfunktion basierend auf der ersten Teilkonfiguration ergeben sollte, sofern sowohl die Streuwertfunktion als auch der Inhalt der ersten Teilkonfiguration und der Referenzstreuwert selbst authentisch sind. In diesem Fall stimmt also der Streuwert mit dem Referenzstreuwert überein. Ist die Streuwertfunktion und/oder die erste Teilkonfiguration und/oder der Referenzstreuwert korrumpiert, also insbesondere nicht authentisch, so stimmen der bestimmte Streuwert und der Referenzstreuwert insbesondere nicht überein.

Wenn die Streuwertfunktion Teil der ersten Teilkonfiguration ist, dann muss insbesondere sichergestellt sein, dass beim Booten die Authentizität der ersten Teilkonfiguration sichergestellt ist, was beispielsweise analog für weitere Teilkonfigurationen gilt.

Insbesondere muss vorausgesetzt werden, dass zum Zeitpunkt des Ladens der Konfigurationsdatei, diese und somit auch der Konfigurationsdatensatz authentisch ist. Dies wird durch vorhandene FPGA Sicherheitsmechanismen während des Bootvorgangs sichergestellt, die als Secure Boot bezeichnet werden können.

Die zweite Teilkonfiguration kann beispielsweise als Teil der Konfigurationsdatei oder über partielle Rekonfiguration während der Laufzeit nachgeladen werden.

Das Überprüfen des Streuwerts mit dem Referenzstreuwert kann ein Vergleichen des Streuwerts mit dem Referenzstreuwert beinhalten.

Das Überprüfen des Streuwerts mit dem Referenzstreuwert kann das einmalige oder mehrmalige Anwenden einer vorgegebenen kryptographischen Funktion jeweils auf den Streuwert und den Referenzstreuwert beinhalten. Das Überprüfen beinhaltet einen Vergleich eines Funktionswertes des Streuwerts mit einem Funktionswert des Referenzstreuwerts.

Mit anderen Worten kann unter Verwendung des berechneten Streuwerts und des vorgegebenen Referenzstreuwerts die Berechnung einer Antwort stattfinden. Diese Antwort kann mit einer Authentisierungsantwort verglichen werden.

Stimmen Streuwert und Referenzstreuwert überein, so ist die ist die berechnete Antwort gleich der Authentisierungsantwort. Dadurch kann die Sicherheit erhöht werden.
Optional kann die Streuwerteinheit eine Überprüfungseinheit zum Anwenden der kryptographischen Funktion auf den Streuwert und den Referenzstreuwert und/oder zum Durchführen des Vergleichs enthalten.

Die Streuwertfunktion ist insbesondere auf dem FPGA oder auf der Streuwerteinheit gespeichert, beispielsweise kann die Streuwertfunktion Teil eines Inhalts der ersten, der zweiten Teilkonfiguration oder einer dritten Teilkonfiguration des Konfigurationsdatensatzes sein.

Dass die Authentizität mittels der Streuwerteinheit abhängig von dem Ergebnis der Überprüfung festgestellt wird, kann insbesondere derart verstanden werden, dass die Streuwerteinheit abhängig von dem Ergebnis der Überprüfung ein Ausgabesignal, insbesondere ein internes oder externes Ausgabesignal, erzeugt. Alternativ oder zusätzlich kann die Streuwerteinheit abhängig von dem Ergebnis des Vergleichs einen Speichereintrag, beispielsweise einen Registereintrag, auf dem FPGA oder dem Ein-Chip-System anlegen oder verändern, wobei der Registereintrag insbesondere das Ergebnis der Überprüfung repräsentiert, also insbesondere ob der bestimmte Streuwert mit dem Referenzstreuwert übereinstimmt oder nicht.

Ist das Ergebnis der Überprüfung beispielsweise derart, dass der Referenzstreuwert mit dem bestimmten Streuwert übereinstimmt, so kann die Authentizität der ersten Teilkonfiguration als gegeben oder festgestellt erachtet werden. Ist das Ergebnis der Überprüfung dagegen dergestalt, dass der bestimmte Streuwert mit dem Referenzstreuwert nicht übereinstimmt, so kann die Authentizität der ersten Teilkonfiguration als nicht festgestellt oder nicht gegeben erachtet werden.

Gemäß dem verbesserten Konzept kann also die Authentizität der ersten Teilkonfiguration zur Laufzeit überprüft werden. Dementsprechend können auch nach dem Laden der Konfigurationsdatei erfolgte Manipulationen oder Änderungen der ersten Teilkonfiguration erkannt werden. Auf entsprechende Abweichungen kann daher auch zur Laufzeit des FPGA reagiert werden, was die Sicherheit erhöht. Der Begriff "Sicherheit" kann dabei Aspekte des englischen Begriffs "Safety" und/oder Aspekte des englischen Begriffs "Security" beinhalten.

Indem der Referenzstreuwert direkt in dem geladenen Bitstream, also in dem Konfigurationsdatensatz, gespeichert ist, kann dieser in einfacher Weise erzeugt und hinterlegt werden, beispielsweise bereits vor dem Laden des Bitstreams oder beim Laden des Bitstreams auf das FPGA.

Gemäß zumindest einer Ausführungsform des Verfahrens nach dem verbesserten Konzept wird, beispielsweise mittels einer externen, also insbesondere extern zum FPGA und extern zum Ein-Chip-System implementierten, Recheneinheit eine initiale Konfigurationsdatei erzeugt, welche die erste Teilkonfiguration enthält, also insbesondere einen Datensatz, welcher der ersten Teilkonfiguration entspricht. Der Referenzstreuwert wird basierend auf der ersten Teilkonfiguration bestimmt, insbesondere mittels der Recheneinheit, insbesondere indem die Streuwertfunktion beziehungsweise eine Referenz- oder Sollstreuwertfunktion auf die erste Teilkonfiguration angewendet wird. Insbesondere mittels der Recheneinheit wird der Referenzstreuwert der initialen Konfigurationsdatei hinzugefügt, um eine Konfigurationsdatei zu erzeugen. Die Konfigurationsdatei wird auf die Logikgatter-Anordnung geladen, um den Konfigurationsdatensatz auf der Logikgatter-Anordnung zu speichern.

Sprachlich wird hier und im Folgenden zwischen der Konfigurationsdatei, welche eine, beispielsweise auf einem externen Speicherelement gespeicherte, Datei ist, und dem Konfigurationsdatensatz unterschieden. Der Konfigurationsdatensatz entspricht dabei der auf das FPGA geladenen Konfigurationsdatei. Mit anderen Worten entspricht die Konfigurationsdatei einer Offline-Repräsentation des Bitstreams und der Konfigurationsdatensatz entspricht einer Online-Repräsentation oder Laufzeit-Repräsentation des Bitstreams.

Das Laden der Konfigurationsdatei auf die Logikgatter-Anordnung kann insbesondere mittels einer weiteren Schnittstelle des FPGA oder des Ein-Chip-Systems erfolgen.

Der Konfigurationsdatensatz ist dabei insbesondere authentisch. Mit anderen Worten wird sichergestellt oder überprüft, dass der Konfigurationsdatensatz authentisch ist. Dies kann insbesondere durch ein Secure-Boot Verfahren erreicht werden.

Dadurch wird sichergestellt, dass ein Angreifer nicht den Referenzstreuwert oder die erste Teilkonfiguration austauschen und das System neu booten kann. Erreicht wird dies durch Secure Boot Mechanismen des FPGA Herstellers.
Es geht in dieser Erfindung also um die Erkennung von möglichen Angriffen zur Laufzeit, also nach dem Laden der initialen Konfiguration.

Dadurch kann der Referenzstreuwert in einer sicheren Umgebung und sicher erzeugt und gespeichert werden, beispielsweise anhand eines digitalen Signaturverfahrens, beispielsweise Elliptic Curve Digital Signature Algorithm, ECDSA, und/oder basierend auf einem Authentifizierungscode, beispielsweise einem Keyed-Hash Message Authentication Code, HMAC. Auch Verfahren zum sicheren und verschlüsselten Laden der Konfigurationsdatei auf das FPGA sind bekannt und können die nach dem verbesserten Konzept ermöglichte Laufzeitauthentifizierung entsprechend ergänzen.

In verschiedenen Ausführungsformen sind die erste und/oder die zweite Teilkonfigurationen Teil der initialen Konfigurationsdatei oder werden während der Laufzeit einzeln partiell hinzugefügt oder ausgetauscht.

In verschiedenen Ausführungsformen ist der Referenzstreuwert fest und nicht konfigurierbar im FPGA oder einem elektronischen Schaltkreis, der das FPGA enthält, verbaut.

In verschiedenen Ausführungsformen ist der Referenzstreuwert im FPGA einmalig programmierbar (englisch: "one-time programmable") und kann daraufhin nicht mehr modifiziert werden.

In verschiedenen Ausführungsformen wird die initiale Konfigurationsdatei auf das FPGA geladen und der Referenzstreuwert wird während des Ladens, insbesondere auf dem FPGA und durch das FPGA, bestimmt und der initialen Konfigurationsdatei angehängt, um den Konfigurationsdatensatz zu erzeugen.

Gemäß zumindest einer Ausführungsform ist in der ersten Teilkonfiguration oder in der zweiten Teilkonfiguration eine Repräsentation der Streuwertfunktion enthalten.

Gemäß zumindest einer Ausführungsform wird eine dritte Teilkonfiguration des Konfigurationsdatensatzes ausgelesen, insbesondere über die Ausleseschnittstelle und insbesondere zur Laufzeit des FPGA, um die Streuwertfunktion auszulesen.

Die dritte Teilkonfiguration enthält also in solchen Ausführungen die Repräsentation der Streuwertfunktion. Damit kann die Streuwertfunktion vorab in dem Bitstream beziehungsweise der Konfigurationsdatei gespeichert werden und in den Konfigurationsdatensatz übertragen werden.

Insbesondere hat die Repräsentation der Streuwertfunktion in der ersten Teilkonfiguration den Vorteil, dass die Streuwertfunktion durch die Überprüfung des Streuwerts mit dem Referenzstreuwert ebenfalls überprüft wird.

Gemäß zumindest einer Ausführungsform ist die Streuwertfunktion fest und nicht konfigurierbar im FPGA oder im elektronischen Schaltkreis verbaut.

Gemäß zumindest einer Ausführungsform wird abhängig von dem Ergebnis der Überprüfung mittels der Streuwerteinheit ein Ausgabesignal erzeugt und mittels einer Steuereinheit, insbesondere des FPGA, der Prozessoreinheit oder des Ein-Chip-Systems, wird abhängig von dem Ausgabesignal eine risikoreduzierende Maßnahme eingeleitet.

Das Ausgabesignal kann mehrere Bits, beispielsweise kryptographisch gesichert, enthalten. Dadurch wird die Manipulationssicherheit erhöht.

Insbesondere kann die Steuereinheit die risikoreduzierende Maßnahme dann einleiten, beispielsweise genau dann, wenn die Überprüfung ergibt, dass der Referenzstreuwert nicht mit dem bestimmten Streuwert übereinstimmt.

Gemäß zumindest einer Ausführungsform enthält die risikoreduzierende Maßnahme einen Abbruch oder ein Stoppen wenigstens einer Berechnung, insbesondere sicherheitsrelevanten Berechnung, die von dem beziehungsweise mittels des FPGA ausgeführt wird.

Gemäß zumindest einer Ausführungsform beinhaltet die risikoreduzierende Maßnahme das Schließen einer oder mehrerer Schnittstellen des FPGA, der Prozessoreinheit oder des Ein-Chip-Systems, insbesondere einer oder mehrerer Ein- und/oder Ausgabe-Schnittstellen.

Gemäß zumindest einer Ausführungsform beinhaltet die risikoreduzierende Maßnahme das Erzeugen eines Statussignals und das Bereitstellen des Statussignals an einer externen Schnittstelle, insbesondere durch das FPGA, die Prozessoreinheit und/oder das Ein-Chip-System.

Gemäß zumindest einer Ausführungsform beinhaltet die risikoreduzierende Maßnahme das Löschen von sicherheitsrelevanten Daten von dem FPGA, beispielsweise eines geheimen Schlüssels.

Gemäß zumindest einer Ausführungsform wird das Auslesen der ersten Teilkonfiguration zur Laufzeit der Logikgatter-Anordnung durchgeführt.

Gemäß zumindest einer Ausführungsform wird das Bestimmen des Streuwerts zur Laufzeit der Logikgatter-Anordnung durchgeführt.

Gemäß zumindest einer Ausführungsform wird das Auslesen der zweiten Teilkonfiguration zur Laufzeit der Logikgatter-Anordnung durchgeführt.

Gemäß zumindest einer Ausführungsform wird ein Modul der Logikgatter-Anordnung, welches durch die erste Teilkonfiguration konfiguriert ist, zum Durchführen einer Berechnung, insbesondere während der Laufzeit des FPGA, verwendet und das Überprüfen des Streuwerts mit dem Referenzstreuwert wird vor oder während oder nach der Verwendung des Moduls durchgeführt.

In verschiedenen Ausführungsformen wird das Überprüfen des Streuwerts mit dem Referenzstreuwert vor und/oder während der Verwendung des Moduls durchgeführt und nach der Verwendung des Moduls wiederholt.

Gemäß zumindest einer Ausführungsform wird das Bestimmen des Streuwerts vor und/oder während und/oder nach der Verwendung des Moduls durchgeführt.

Gemäß zumindest einer Ausführungsform wird das Feststellen der Authentizität vor und/oder während und/oder nach der Verwendung des Moduls durchgeführt.

Gemäß zumindest einer Ausführungsform wird die Verwendung des Moduls zum Durchführen der Berechnung eingeleitet und das Überprüfen des Streuwerts mit dem Referenzstreuwert wird nach dem Einleiten und vor der Verwendung, mit anderen Worten also unmittelbar vor der Verwendung, des Moduls durchgeführt.

Gemäß zumindest einer Ausführungsform wird das Überprüfen nach dem Einleiten der Verwendung des Moduls und vor der Verwendung des Moduls durchgeführt und während der Verwendung und/oder nach der Verwendung des Moduls wiederholt.

Gemäß zumindest einer Ausführungsform erfolgt das Auslesen der ersten Teilkonfiguration und/oder das Auslesen der zweiten Teilkonfiguration gemäß oder mittels einer Rekonfigurationsschnittstelle.

Insbesondere ist die Ausleseschnittstelle als "Internal Configuration Access Port", ICAP, des Anbieters "Xilinx" implementiert.

Gemäß dem verbesserten Konzept wird auch ein elektronischer Schaltkreis mit einer feldprogrammierbaren Logikgatter-Anordnung angegeben. Die Logikgatter-Anordnung weist eine Speichereinheit auf, auf der ein Konfigurationsdatensatz gespeichert ist. Der elektronische Schaltkreis weist eine Streuwerteinheit auf, die dazu eingerichtet ist, eine erste Teilkonfiguration des Konfigurationsdatensatzes über eine Ausleseschnittstelle des elektronischen Schaltkreises, insbesondere von der Speichereinheit, auszulesen. Die Streuwerteinheit ist dazu eingerichtet, insbesondere basierend auf der ausgelesenen ersten Teilkonfiguration, einen Streuwert der ersten Teilkonfiguration gemäß einer vorgegebenen Streuwertfunktion zu bestimmen. Die Streuwerteinheit ist dazu eingerichtet, eine zweite Teilkonfiguration des Konfigurationsdatensatzes über die Ausleseschnittstelle, insbesondere von der Speichereinheit, auszulesen, um einen vorgegebenen Referenzstreuwert der ersten Teilkonfiguration zu bestimmen. Die Streuwerteinheit ist dazu eingerichtet, den Streuwert mit dem Referenzstreuwert zu überprüfen und abhängig von einem Ergebnis der Überprüfung eine Authentizität der ersten Teilkonfiguration festzustellen.

Der elektronische Schaltkreis ist insbesondere als integrierter Schaltkreis, beispielsweise als Ein-Chip-System, auch als System-on-a-Chip, SoC, bezeichnet, ausgestaltet.

Gemäß zumindest einer Ausführungsform des elektronischen Schaltkreises nach dem verbesserten Konzept enthält die Speichereinheit einen statischen Speicher mit wahlfreiem Zugriff, also ein statisches RAM, SRAM.

Gemäß zumindest einer Ausführungsform enthält die Logikgatter-Anordnung die Streuwerteinheit. Die Ausleseschnittstelle ist als interne Schnittstelle der Logikgatter-Anordnung ausgestaltet.

Gemäß zumindest einer Ausführungsform weist der Schaltkreis eine Prozessoreinheit auf, die insbesondere mit der Logikgatter-Anordnung verbunden ist, wobei die Prozessoreinheit die Streuwerteinheit enthält. Die Ausleseschnittstelle ist als Schnittstelle zwischen der Logikgatter-Anordnung und der Prozessoreinheit ausgestaltet.

Gemäß zumindest einer Ausführungsform enthält der elektronische Schaltkreis ein Ein-Chip-System das die Logikgatter-Anordnung und die Prozessoreinheit enthält.

Weitere Ausführungsbeispiele des elektronischen Schaltkreises nach dem verbesserten Konzept ergeben sich unmittelbar aus den verschiedenen Ausgestaltungsformen des Verfahrens nach dem verbesserten Konzept und umgekehrt. Insbesondere kann ein elektronischer Schaltkreis nach dem verbesserten Konzept dazu eingerichtet oder programmiert sein, ein Verfahren nach dem verbesserten Konzept durchzuführen oder führt ein solches Verfahren durch.

Gemäß dem verbesserten Konzept wird auch ein Datenverarbeitungsprogramm mit Befehlen angegeben, welche bei Ausführung des Datenverarbeitungsprogramms durch eine Datenverarbeitungseinrichtung, insbesondere durch einen elektronischen Schaltkreis nach dem verbesserten Konzept, die Datenverarbeitungseinrichtung dazu veranlassen, ein Verfahren nach dem verbesserten Konzept durchzuführen.

Gemäß dem verbesserten Konzept wird auch ein computerlesbares Speichermedium angegeben, auf dem ein Datenverarbeitungsprogramm nach dem verbesserten Konzept gespeichert ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform eines elektronischen Schaltkreises nach dem verbesserten Konzept;
- FIG 2: ein Ablaufdiagramm einer beispielhaften Ausführungsform eines Verfahrens nach dem verbesserten Konzept;
- FIG 3: eine schematische Darstellung einer weiteren beispielhaften Ausführungsform eines elektronischen Schaltkreises nach dem verbesserten Konzept; und
- FIG 4: eine schematische Darstellung einer weiteren beispielhaften Ausführungsform eines elektronischen Schaltkreises nach dem verbesserten Konzept.

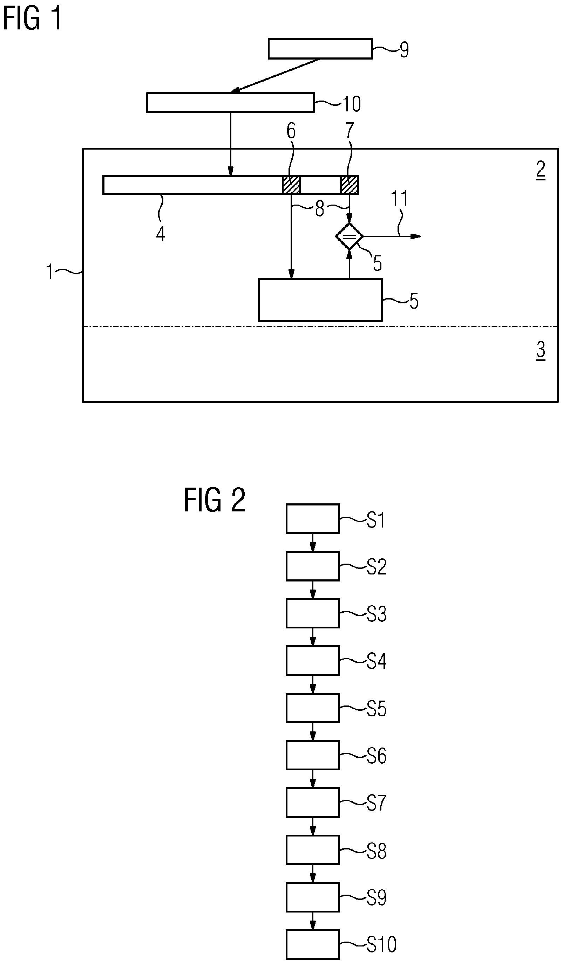

In FIG 1 ist ein elektronischer Schaltkreis 1 nach dem verbesserten Konzept dargestellt, der insbesondere als Ein-Chip-System oder System-on-a-Chip, SoC, ausgestaltet ist.

Der Schaltkreis 1 weist ein FPGA 2 sowie eine Prozessoreinheit 3 auf. Die Prozessoreinheit 3 kann beispielsweise eine oder mehrere Prozessoren oder Co-Prozessoren, Speicherelemente oder sonstige funktionale Einheiten beinhalten. Beispielsweise kann die Prozessoreinheit 3 als Hard-Processor-System, HPS, ausgestaltet sein.

Das FPGA 2 weist ein Speicherelement 4 auf, beispielsweise ein SRAM. Auf dem Speicherelement 4 ist ein Konfigurationsdatensatz gespeichert, der eine erste Teilkonfiguration 6 und eine zweite Teilkonfiguration 7 enthält. Optional kann der Konfigurationsdatensatz weitere Teilkonfigurationen enthalten.

Die erste Teilkonfiguration 6 entspricht insbesondere einem Modul des FPGA 2, dessen Authentizität anhand des verbesserten Konzepts überprüft werden kann.

Die zweite Teilkonfiguration 7 enthält insbesondere einen Referenz-Hashwert, der beispielsweise vor oder beim Erzeugen des Konfigurationsdatensatzes erzeugt wurde, indem eine Hashfunktion auf den Inhalt, welcher der ersten Teilkonfiguration 6 zuzuordnen ist, angewendet wurde.

Die Hashfunktion selbst ist insbesondere ebenfalls auf dem FPGA 2, insbesondere auf dem Speicherelement 4, oder der Prozessoreinheit 3 gespeichert.

Das FPGA 2 enthält außerdem eine Streuwerteinheit 5, die mit dem Speicherelement 4 über eine Ausleseschnittstelle 8, beispielsweise eine ICAP-Schnittstelle, gekoppelt ist.

Über die Ausleseschnittstelle 8 kann die Streuwerteinheit 5 zur Laufzeit des FPGA 2 sowohl die erste Teilkonfiguration 6 als auch die zweite Teilkonfiguration 7 auslesen und damit die erste Teilkonfiguration 6 sowie den Referenz-Hashwert bestimmen.

Die Streuwerteinheit 5 ist außerdem dazu eingerichtet, basierend auf der ersten Teilkonfiguration 6 mithilfe der Hashfunktion einen Hashwert zu berechnen und den bestimmten Hashwert mit dem Referenz-Hashwert zu vergleichen.

Ergibt der Vergleich, dass Hashwert und Referenz-Hashwert übereinstimmen, so kann von der Authentizität der ersten Teilkonfiguration 6 ausgegangen werden. Ergibt der Vergleich, dass Hashwert und Referenz-Hashwert nicht übereinstimmen, so kann dies als Hinweis auf eine Manipulation oder, beabsichtigte oder unbeabsichtigte, Veränderung der ersten Teilkonfiguration 6, beispielsweise zur Laufzeit, interpretiert werden.

Abhängig von einem Ergebnis des Vergleichs kann die Streuwerteinheit 5 beispielsweise ein Ausgabesignal 11 erzeugen.

Optional kann auch eine kryptographische Funktion auf den Hashwert und den Referenzhashwert angewendet werden. Statt den Hashwert direkt mit dem Referenz-Hashwert zu überprüfen, kann die Streuwerteinheit 5 dann die entsprechenden Funktionswerte der kryptographischen Funktion überprüfen.

In FIG 1 ist außerdem schematisch die Erzeugung des Konfigurationsdatensatzes angedeutet. Insbesondere wird vorab, also insbesondere offline, das heißt vor dem Laden des Bitstreams, durch einen Benutzer eine initiale FPGA-Konfigurationsdatei oder ein initialer Bitstream 9 generiert. Dieser initiale Bitstream 9 enthält den Inhalt der ersten Teilkonfiguration 6. Der Referenz-Hashwert wird basierend auf dem Inhalt der ersten Teilkonfiguration 6 berechnet und dem initialen Bitstream 9 hinzugefügt, um einen finalen Bitstream oder eine Konfigurationsdatei 10 zu erzeugen. Die Konfigurationsdatei 10 wird dann auf das FPGA 2, insbesondere das Speicherelement 4, geladen, um den Konfigurationsdatensatz zu erzeugen.

In FIG 2 ist ein Ablaufdiagramm einer beispielhaften Ausführungsform eines Verfahrens zur Authentifizierung einer Teilkonfiguration einer feldprogrammierbaren Logikgatter-Anordnung nach dem verbesserten Konzept gezeigt, beispielsweise eines elektronischen Schaltkreises 1 beziehungsweise eines FPGA 2 des elektronischen Schaltkreises 1, wie er in FIG 1 gezeigt ist.

In Schritt S1 wird der initiale Bitstream 9 erzeugt, der die erste Teilkonfiguration 6 enthält. In Schritt S2 wird der Referenz-Hashwert basierend auf der ersten Teilkonfiguration 6 bestimmt und in Schritt S3 wird der Referenz-Hashwert dem initialen Bitstream 9 hinzugefügt, um die Konfigurationsdatei 10 zu erzeugen.

Wird der Referenz-Hashwert nach der Erzeugung des initialen Bitstreams 9 an diesen angehängt, so kann es erforderlich sein, dass eine Signatur für eine Bitstreamüberprüfung neu berechnet werden muss. Alternativ kann der Referenz-Hashwert als Konstante einem Quellcode, beispielsweise in einer Hardwarebeschreibungssprache, hinzugefügt werden und der Bitstream kann daraufhin neu generiert werden, um die Konfigurationsdatei 10 zu erzeugen.

In Schritt S4 wird die Konfigurationsdatei 10 auf das FPGA 2 geladen, um den Konfigurationsdatensatz zu erzeugen.

In Schritt S5 wird die erste Teilkonfiguration 6 ausgelesen, in Schritt S6 wird der Hashwert gemäß der Streuwertfunktion berechnet. In Schritt S7 wird die zweite Teilkonfiguration 7 ausgelesen, um den Referenz-Hashwert zu bestimmen. In Schritt S8 wird der Hashwert mit dem Referenz-Hashwert verglichen.

In Schritt S9 wird die Authentizität der ersten Teilkonfiguration 6 durch den Vergleich beziehungsweise anhand eines Ergebnisses des Vergleichs festgestellt. In Schritt S10 wird beispielsweise das Ausgabesignal 11 erzeugt.

Durch das Ausgabesignal 11 können verschiedene Folgeaktionen getriggert werden. Beispielsweise können kritische Berechnungen auf dem FPGA 2 gestoppt werden, Ein- und Ausgabeschnittstellen können geschlossen werden, das FPGA 2 kann ein Statussignal über eine externe Schnittstelle nach außen abgeben und/oder kritische Daten, beispielsweise geheime Schlüssel, können gelöscht werden, und so weiter.

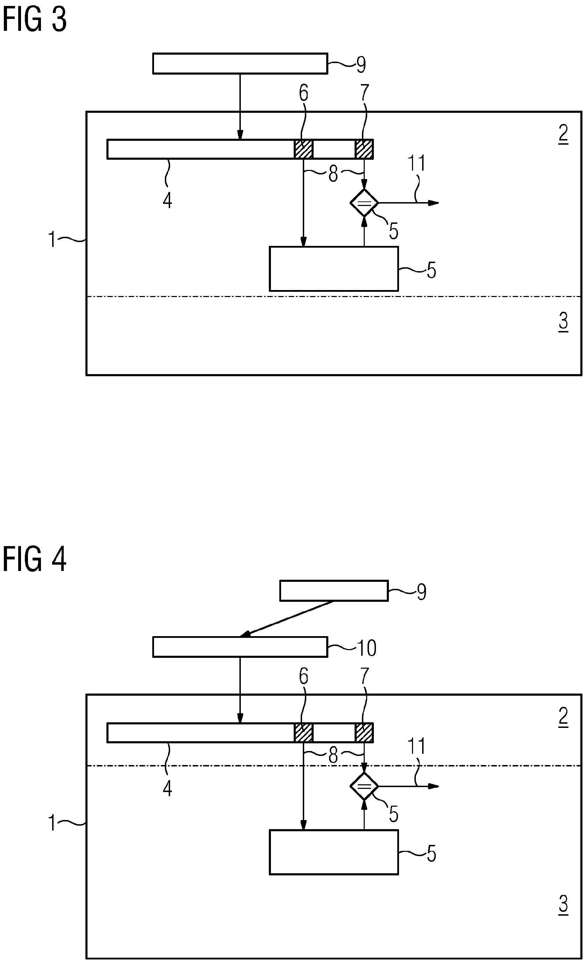

In FIG 3 ist schematisch eine weitere beispielhafte Ausführungsform des elektronischen Schaltkreises 1 gemäß dem verbesserten Konzept dargestellt, wobei der elektronische Schaltkreis 1 selbst dem in FIG 1 gezeigten entspricht.

Im Unterschied zu FIG 1 wurde der Konfigurationsdatensatz gemäß FIG 3 beispielsweise direkt beim Laden des initialen Bitstreams 9 in dem FPGA 2 gebildet und auf dem Speicherelement 4 gespeichert.

In FIG 4 ist eine weitere beispielhafte Ausführungsform eines elektronischen Schaltkreises 1 nach dem verbesserten Konzept gezeigt.

Von dem Schaltkreis 1 der FIG 1 unterscheidet sich der Schaltkreis 1 der FIG 4 insbesondere dadurch, dass die Streuwerteinheit 5 auf der Prozessoreinheit 3 implementiert ist und nicht auf dem FPGA 2. Abgesehen davon sind die Schaltkreise 1 der FIG 1 und der FIG 4 gleich ausgestaltet.

Das dem verbesserte Konzept ermöglicht es die Integrität von FPGA-Teilkonfigurationen zur Laufzeit zu überprüfen und dadurch Manipulationen oder Fehler der FPGA-Teilkonfiguration, beispielsweise in sicherheitskritischen Modulen, zu erkennen. Dazu wird die zu überprüfende Teilkonfiguration zur Laufzeit insbesondere über eine interne Schnittstelle ausgelesen und mit einem Referenzstreuwert, der ebenfalls in der Konfiguration enthalten ist, direkt oder indirekt verglichen. Dadurch können FPGA-Teilkonfigurationen vor, während und/oder nach der Durchführung kritischer Operationen gegen Laufzeitmanipulationen geschützt werden.

## Patentansprüche

1. Verfahren zur Authentifizierung einer Teilkonfiguration einer feldprogrammierbaren Logikgatter-Anordnung (2), auf der ein Konfigurationsdatensatz gespeichert ist, wobei
- eine erste Teilkonfiguration (6) des Konfigurationsdatensatzes ausgelesen wird;
- mittels einer Streuwerteinheit (5) ein Streuwert der ersten Teilkonfiguration (6) gemäß einer vorgegebenen Streuwertfunktion bestimmt wird;
- eine zweite Teilkonfiguration (7) des Konfigurationsdatensatzes ausgelesen wird, um einen vorgegebenen Referenzwert der ersten Teilkonfiguration (6) zu bestimmen;
- der Streuwert mittels der Streuwerteinheit (5) mit dem Referenzstreuwert überprüft wird;
- mittels der Streuwerteinheit (5) abhängig von einem Ergebnis der Überprüfung eine Authentizität der ersten Teilkonfiguration (6) festgestellt wird.

2. Verfahren nach Anspruch 1, wobei
- eine initiale Konfigurationsdatei (9) erzeugt wird, welche die erste Teilkonfiguration (6) enthält;
- der Referenzstreuwert basierend auf der ersten Teilkonfiguration bestimmt wird;
- der Referenzstreuwert der initialen Konfigurationsdatei (9) hinzugefügt wird, um eine Konfigurationsdatei (10) zu erzeugen; und
- die Konfigurationsdatei (10) auf die Logikgatter-Anordnung (2) geladen wird, um den Konfigurationsdatensatz zu speichern.

3. Verfahren nach einem der Ansprüche 1 oder 2, wobei
- eine Repräsentation der Streuwertfunktion in der ersten Teilkonfiguration (6) oder der zweiten Teilkonfiguration (7) enthalten ist; oder
- eine dritte Teilkonfiguration des Konfigurationsdatensatzes ausgelesen wird.

4. Verfahren nach einem der Ansprüche 1 bis 3, wobei
- abhängig von dem Ergebnis der Überprüfung mittels der Streuwerteinheit (5) ein Ausgabesignal (11) erzeugt wird; und
- mittels einer Steuereinheit abhängig von dem Ausgabesignal (11) eine risikoreduzierende Maßnahme eingeleitet wird.

5. Verfahren nach einem der Ansprüche 1 bis 4, wobei das Auslesen der ersten Teilkonfiguration (6), das Bestimmen des Streuwerts und/oder das Auslesen der zweiten Teilkonfiguration (7) zu einer Laufzeit der Logikgatter-Anordnung (2) durchgeführt wird.

6. Verfahren nach einem der Ansprüche 1 bis 5, wobei
- ein Modul der Logikgatter-Anordnung (2), welches durch die erste Teilkonfiguration (6) konfiguriert ist, zum Durchführen einer Berechnung verwendet wird; und
- das Überprüfen des Streuwerts mit dem Referenzstreuwert vor oder während oder nach der Verwendung des Moduls durchgeführt wird.

7. Verfahren nach einem der Ansprüche 1 bis 5,
- eine Verwendung eines Moduls der Logikgatter-Anordnung (2), welches durch die erste Teilkonfiguration (6) konfiguriert ist, zum Durchführen einer Berechnung eingeleitet wird; und
- das Überprüfen des Streuwerts mit dem Referenzstreuwert nach dem Einleiten und vor der Verwendung des Moduls durchgeführt wird.

8. Verfahren nach einem der Ansprüche 1 bis 7, wobei das Auslesen der ersten Teilkonfiguration (6) und/oder das Auslesen der zweiten Teilkonfiguration (7) gemäß einer Rekonfigurationsschnittstelle erfolgt.

9. Elektronischer Schaltkreis mit einer feldprogrammierbaren Logikgatter-Anordnung (2), wobei
- die Logikgatter-Anordnung (2) eine Speichereinheit (4) aufweist, auf der ein Konfigurationsdatensatz gespeichert ist; und
- der elektronische Schaltkreis (1) eine Streuwerteinheit (5) aufweist, die dazu eingerichtet ist,
- eine erste Teilkonfiguration (6) des Konfigurationsdatensatzes über eine Ausleseschnittstelle (8) des Schaltkreises (1) auszulesen;
- einen Streuwert der ersten Teilkonfiguration (6) gemäß einer vorgegebenen Streuwertfunktion zu bestimmen;
- eine zweite Teilkonfiguration (7) des Konfigurationsdatensatzes über die Ausleseschnittstelle (8) auszulesen, um einen vorgegebenen Referenzstreuwert der ersten Teilkonfiguration (6) zu bestimmen;
- den Streuwert mit dem Referenzstreuwert zu überprüfen; und
- abhängig von einem Ergebnis der Überprüfung eine Authentizität der ersten Teilkonfiguration (6) festzustellen.

10. Elektronischer Schaltkreis nach Anspruch 9, wobei die Speichereinheit (4) einen statischen Speicher mit wahlfreiem Zugriff enthält.

11. Elektronischer Schaltkreis nach einem der Ansprüche 9 oder 10, wobei
- die Logikgatter-Anordnung (2) die Streuwerteinheit (5) enthält; und
- die Ausleseschnittstelle (8) als interne Schnittstelle der Logikgatter-Anordnung (2) ausgestaltet ist.

12. Elektronischer Schaltkreis nach einem der Ansprüche 9 oder 10, wobei
- der Schaltkreis (1) eine Prozessoreinheit (3) aufweist, welche die Streuwerteinheit (5) enthält; und
- die Ausleseschnittstelle (8) als Schnittstelle zwischen der Logikgatter-Anordnung (2) und der Prozessoreinheit (3) ausgestaltet ist.

13. Elektronischer Schaltkreis nach Anspruch 12, der ein Ein-Chip-System aufweist, welches die Logikgatter-Anordnung (2) und die Prozessoreinheit (3) enthält.

14. Datenverarbeitungsprogramm mit Befehlen, welche bei Ausführung des Datenverarbeitungsprogramms durch eine Datenverarbeitungseinrichtung die Datenverarbeitungseinrichtung dazu veranlassen, ein Verfahren nach einem der Ansprüche 1 bis 8 durchzuführen.

15. Computerlesbares Speichermedium, auf dem ein Datenverarbeitungsprogramm nach Anspruch 14 gespeichert ist.
